# FASCICULE DE BREVET EUROPEEN

(11) **EP 1 564 859 B1**
(45) Date de publication et mention de la délivrance du brevet: **25.11.2009**
(21) Numéro de dépôt: 04075449.1
(22) Date de dépôt: 13.02.2004
(51) Int. Cl.: H02G 3/12

(54) **Boîtier à brides pour cloisons creuses**
Flanschgehäuse für eine dünne Wand
Flanged housing for a thin wall

(43) Date de publication de la demande: 17.08.2005
(73) Titulaire: Alombard, 45750 Saint-Pryvé - Saint-Mesmin (FR)
(72) Inventeur: Lapouble, Serge, 45370 Dry (FR)
(74) Mandataire: Debay, Yves

(56) Documents cités:
- DE-A- 2 355 826
- FR-A- 2 839 818

## Description

La présente invention concerne un boîtier à brides se fixant dans une cloison creuse, afin d'encastrer dans cette cloison un appareillage électrique, tel que, par exemple, un interrupteur ou une prise de courant.

Il est connu dans l'art antérieur de nombreux boîtiers à brides pour cloisons creuses, destinés à la fixation de l'appareillage électrique encastré et permettant la mise en place de l'appareillage électrique de façon sure et durable, en particulier lorsque ces derniers sont fixés à l'aide de vis présentes sur les boîtiers. L'appareillage électrique destiné à être placé dans le boîtier comporte, en général, un mécanisme qui s'insère dans le boîtier, et une façade comportant une interface, et deux trous oblongs destinés à la fixation de l'appareillage sur le boîtier. L'interface consiste, par exemple, en un bouton dans le cas où l'appareillage électrique est un interrupteur, ou en deux puits dans le cas où l'appareillage électrique est une prise de courant. L'axe de symétrie de chaque trou oblong de la façade décrit un arc de cercle. Les deux trous oblongs sont, en général, disposés en vis-à-vis sur la façade de l'appareillage électrique, l'axe de cet arc de cercle étant orthogonal à la façade de l'appareillage électrique, de telle façon que les axes des arcs de cercle décrits par les axes de symétrie des trous oblongs sont confondus selon un axe, que l'on appellera principal, et sont orthogonaux à la façade de l'appareillage électrique. Au moins une extrémité de chaque trou oblong se termine par un orifice circulaire d'axe orthogonal à la façade de l'appareillage électrique. Le diamètre de l'orifice est suffisant pour permettre à une tête de vis de passer par l'orifice circulaire. Lorsque les vis du boîtier sont partiellement dévissées, l'appareillage électrique est inséré dans le boîtier, les vis du boîtier pénétrant dans les orifices circulaires de la façade de l'appareillage électrique. L'appareillage électrique est alors facilement mis en place en exerçant une rotation de ce dernier autour de l'axe principal. Les vis du boîtier sont ensuite serrées pour assurer un positionnement d'aplomb et un maintien de l'appareillage électrique. Les boîtiers comportent des moyens de fixation à la cloison, par exemple des brides, actionnés par des vis. Les brides prennent appui sur l'arrière de la cloison creuse après que la cloison a été percée au diamètre du boîtier avec, par exemple, une scie cloche.

En général, l'appareillage électrique est fixé sur ce type de boîtier à l'aide d'une première paire de vis, et les brides du boîtier sont manoeuvrées à l'aide d'une deuxième paire de vis pour fixer le boîtier sur la cloison. Dans ce type de boîtier, les brides sont séparées du boîtier. L'installateur doit, lors de la pose du boîtier, actionner les vis de manoeuvre des brides pour fixer le boîtier à la cloison, puis après avoir raccordé l'appareillage électrique aux conducteurs électriques débouchant à l'intérieur du boîtier, fixer l'appareillage par les vis du dit boîtier. La pose d'un boîtier de ce type entraîne donc au moins deux manoeuvres, ce qui entraîne une pose relativement compliquée et une perte de temps. D'un point de vue industriel, les fabricants de tels boîtiers sont contraints à développer des machines complexes afin d'assembler les deux paires de vis et les brides au boîtier, ce qui occasionne des coûts importants répercutés sur le prix de vente.

Par ailleurs, de nombreux boîtiers à brides pour cloisons creuses présentent, sur leur pourtour extérieur, près du bord ouvert du boîtier, une collerette permettant d'empêcher l'enfoncement du boîtier dans la cloison lors de sa fixation. La présence de cette collerette entraîne l'existence d'un espace entre la façade de l'appareillage électrique et la cloison. Ceci a pour inconvénient que la façade de l'appareillage électrique n'est pas plaquée correctement contre la cloison, entraînant un jeu entre la façade de l'appareillage électrique et la cloison.

La demande de brevet français FR 2 839 818 du même déposant enseigne un boîtier à brides pour cloisons creuses plus simple et plus rapide à poser, permettant un plaquage parfait de l'appareillage électrique contre la cloison. Le boîtier comprend deux brides articulées, pouvant subir un mouvement de translation et/ou un mouvement de rotation, chaque bride étant actionnée en translation par une vis pour fixer le boîtier dans la cloison creuse, le vissage de ladite vis permettant simultanément de fixer l'appareillage électrique dans le boîtier et de pincer la cloison creuse entre la façade de l'appareillage électrique et les brides.

Les parois des cloisons creuses ont habituellement des épaisseurs de 13 mm, voire parfois de 10 mm. Toutefois, pour améliorer l'isolation phonique, il n'est pas rare d'ajouter une paroi en plâtre de même épaisseur sur la cloison creuse, ce qui peut porter l'épaisseur totale de la paroi à 26 mm (ou 20 mm). Or, les boîtiers connus dans l'art antérieur sont facilement insérables dans une paroi d'épaisseur déterminée mais ne sont en général pas prévus pour s'adapter à des parois d'épaisseurs très différentes.

La présente invention a pour but de pallier certains inconvénients de l'art antérieur en proposant un boîtier à brides pour cloisons creuses qui soit simple et rapide à poser et qui puisse s'adapter à des parois de cloisons ayant des épaisseurs très différentes.

Ce but est atteint par un boîtier à brides comportant une partie cylindrique fermée par un fond pour fixer un appareillage électrique dans une cloison creuse, comprenant au moins deux brides articulées, chaque bride pouvant subir un mouvement de translation et/ou un mouvement de rotation, et chaque bride étant actionnée par une vis pour fixer le boîtier dans la cloison creuse, les brides et le boîtier formant un ensemble monobloc, caractérisé en ce qu'il comprend également au moins deux cales amovibles, chaque cale étant située dans le prolongement d'une des brides, et en ce que le vissage de la vis permet simultanément de fixer l'appareillage électrique dans le boîtier et de pincer la cloison creuse entre la façade de l'appareillage électrique et chaque cale des ensembles bride - cale.

Selon une autre particularité, chaque bride est située dans une ouverture pratiquée dans la partie cylindrique du boîtier et délimitée par une découpe en "U", chaque bride étant reliée au fond du boîtier par une pièce en forme d'arc qui est flexible, permettant la rotation de la bride ou de l'ensemble bride - cale autour de la pièce en forme d'arc pour permettre l'insertion du boîtier dans un perçage cylindrique de la cloison creuse, ou pour retirer le boîtier de ce perçage, la pièce en forme d'arc étant prolongée par une languette, à l'extrémité libre de laquelle est formé un épaulement sensiblement perpendiculaire à la languette.

Selon une autre particularité, chaque bride comprend au moins une rampe formée perpendiculairement à l'épaulement et la languette pour constituer une cornière, la rampe permettant de faciliter l'escamotage de la bride pour permettre l'insertion du boîtier dans le perçage de la cloison creuse.

Selon une autre particularité, un puits, taraudé à l'intérieur, est formé dans la masse de la languette de chaque bride, et accueille une vis et en ce qu'une paire de colonnes est formée perpendiculairement à l'épaulement de chaque bride, sur la surface supérieure de ce dernier, chaque colonne de la paire de colonnes étant situé de part et d'autre du puits pour servir de moyen de guidage à chaque cale.

Selon une autre particularité, chaque cale comporte une plaque, à une extrémité de laquelle un épaulement est formé sensiblement perpendiculairement à ladite plaque, et deux rainures, chaque cale étant maintenue en place sur le boîtier, dans le prolongement d'une bride, par insertion des colonnes de la bride entre la plaque de la cale et les rainures de la cale, l'épaulement de la cale étant sensiblement parallèle à l'épaulement de la bride, duquel il est séparé par la hauteur de la plaque, et la hauteur de la cale étant inférieure à la hauteur des colonnes.

Selon une autre particularité, chaque cale comporte deux renforts parallèles formés contre chaque plaque et chaque épaulement, et un demi-puits, de section semi-circulaire, formé dans chaque plaque, ledit demi-puits accueillant l'extrémité supérieure de la vis vissée dans la bride correspondante, et les rainures de la cale étant formées en saillie sur la surface extérieure du demi-puits, parallèlement à l'axe de ce dernier.

Selon une autre particularité, le rayon interne de la section circulaire du demi-puits est constant et sensiblement égal à celui de la vis dans la partie du demi-puits proche de l'extrémité libre de la plaque, et constant et sensiblement égal à celui de la tête de la vis dans la partie du demi-puits proche de l'extrémité de la plaque solidaire de l'épaulement, le rayon interne du demi-puits varie de façon continue entre ces deux parties.

Selon une autre particularité, le boîtier à brides comprend au moins deux pièces en forme de W arrondi ou aplati, la partie centrale de chaque pièce en forme de W arrondi ou aplati comportant deux bossages pour maintenir une vis encliquetée dans l'espace disponible dans la partie centrale, chacun des bossages étant situé de part et d'autre de l'ouverture de la partie centrale, et chaque pièce en forme de W arrondi ou aplati étant disposée de façon à pouvoir coopérer avec une bride.

Selon une autre particularité, le boîtier étant au repos, le puits de chaque bride se situe dans l'axe de la partie centrale de la pièce en forme de W arrondi ou aplati associée, et les colonnes de chaque bride se situent respectivement dans les axes des parties extrêmes de la pièce en forme de W arrondi ou aplati associée.

Selon une autre particularité, l'arrière de l'appareillage électrique étant inséré dans le boîtier encastré dans la cloison creuse, chaque vis, insérée dans un moyen de fixation de l'appareillage électrique, est vissée dans le puits associé à ladite vis, et chaque bride ou chaque ensemble bride - cale subit un mouvement de translation selon l'axe de la vis, entraînant l'insertion de chaque paire de colonnes dans l'espace disponible dans les parties extrêmes de la pièce en forme de W arrondi ou aplati, pour assurer la prise en sandwich de la cloison entre les épaulements des brides ou des cales et la face arrière de la façade de l'appareillage électrique.

Selon une autre particularité, le moyen de fixation de l'appareillage électrique comprend au moins deux trous oblongs dont l'axe de symétrie décrit un arc de cercle et dont une extrémité se termine par une portion circulaire de diamètre supérieur au diamètre de la tête de vis, l'entraxe des trous oblongs étant sensiblement égale à l'entraxe des vis.

Selon une autre particularité, le boîtier comporte des picots en saillie sur le pourtour extérieur du boîtier à proximité de son bord ouvert pour l'empêcher de tourner par rapport à la cloison creuse et assurer son maintien en attendant la mise en place de l'appareillage électrique.

Selon une autre particularité, la partie cylindrique et/ou le fond du boîtier comprend un ou plusieurs opercules détachables pour permettre la connexion de l'appareillage électrique à des fils électriques situés dans la cloison creuse.

Un autre but de l'invention est de proposer un procédé pour retirer chaque cale du boîtier à brides selon l'invention, avant fixation de l'appareillage électrique dans une cloison creuse à l'aide du boîtier.

Ce but est atteint par le procédé, caractérisé en ce qu'il comprend les étapes suivantes :
- rotation de chaque ensemble bride - cale vers l'intérieur du boîtier,
- coulissement de chaque cale le long de la vis, guidé par les colonnes de la bride, vers le bord du boîtier, jusqu'à ce que le dessous de la tête de vis atteigne le fond de la partie du demi-puits ayant le rayon le plus important,
- basculement de la cale vers l'extérieur du boîtier en maintenant la vis inclinée vers l'intérieur du boîtier.

D'autres particularités et avantages de la présente invention apparaîtront plus clairement à la lecture de la description ci-après, faite en référence aux dessins annexés, dans lesquels :
- la figure 1 représente une vue en perspective du boîtier à brides pour cloisons creuses selon l'invention,
- les figures 2a à 2d représentent les étapes successives de retrait d'une des cales du boîtier à brides selon l'invention, vu en coupe,
- les figures 3a et 3b représentent une vue en perspective, respectivement de face et arrière, d'une des cales,
- la figure 4 représente une vue en perspective de la façade de l'appareillage électrique dans un mode de réalisation,
- les figures 5a et 5b représentent une vue en coupe, selon le plan passant par les axes des vis, du boîtier à brides selon l'invention, implanté dans une cloison creuse, à paroi respectivement simple ou double.

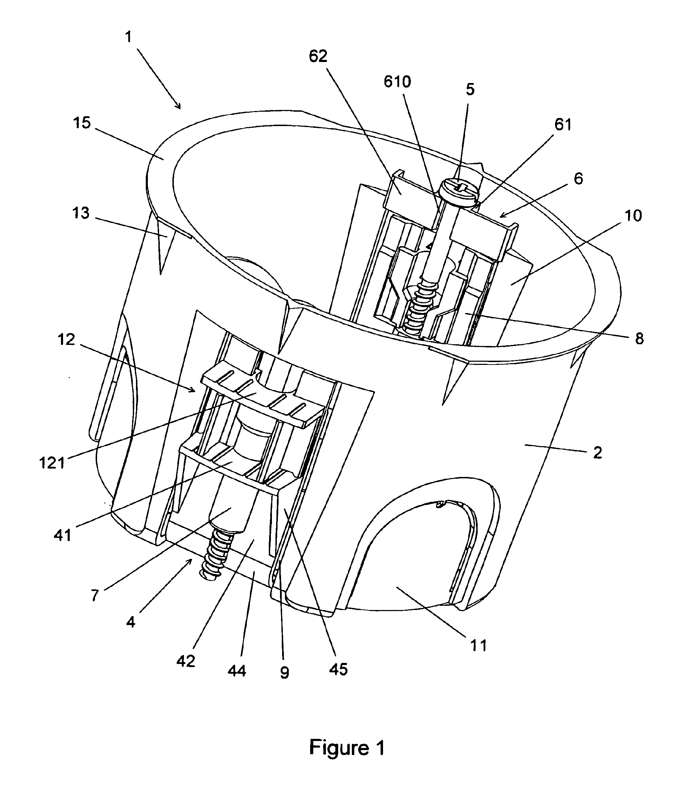

Le boîtier (1) à brides (4) selon l'invention, représenté en particulier sur la figure 1, comprend une partie cylindrique (2), fermée d'un seul côté par un fond (3), et au moins deux brides (4). Chaque bride (4) est située dans une ouverture pratiquée dans la partie cylindrique (2) et délimitée par une découpe (9) en forme de U. Dans le cas où deux brides (4) sont présentes sur le boîtier (1), les brides (4) sont sensiblement situées l'une en face de l'autre. Chaque bride (4) n'est maintenue au boîtier (1) que par une pièce en forme d'arc (44), située entre le bord de la bride (4) situé à proximité du fond (3) et le fond (3), les trois autres bords de la bride (4) étant séparés du reste du boîtier (1) par la découpe (9) en forme de U. Deux plaques (10) rectangulaires, perpendiculaires au fond (3), sont formées sur la partie intérieure de la partie cylindrique (2), chacune des plaques (10) étant de part et d'autre de la découpe (9) en forme de U. Une pièce en forme de W arrondi ou aplati (6) est formée contre chaque paire de plaques (10), entre le sommet de chaque découpe (9) et le bord (15) du boîtier (1). Chaque pièce en forme de W arrondi ou aplati (6) est perpendiculaire aux plaques (10) et située du côté des plaques (10) opposé au fond (3). La partie centrale (61) de chaque pièce en forme de W arrondi ou aplati (6) forme un guide en portion de cylindre, ouvert vers l'intérieur du boîtier, et délimité par deux bossages (610). Cette partie centrale (61), d'axe sensiblement parallèle à l'axe de symétrie du boîtier, permet, de part sa forme, de maintenir une vis (5) encliquetée en son sein. La vis (5) peut facilement être désencliquetée de la partie centrale (61) grâce à l'élasticité de la pièce en forme de W arrondi ou aplati (6). Chaque pièce en forme de W arrondi ou aplati (6) est disposée de façon à pouvoir coopérer avec une bride (4).

Chaque bride (4) comprend, dans le prolongement de la pièce en forme d'arc (44), une languette (42) rectangulaire formant, au repos, avec le fond (3) du boîtier, un angle de sensiblement 90°. Un épaulement (41) est formé à l'extrémité libre de chaque languette (42), sensiblement perpendiculairement à la languette. Lorsque la bride (4) est au repos, cet épaulement (42) est alors sensiblement parallèle au fond (3) du boîtier (1) et en partie situé à l'extérieur de la partie cylindrique (2). Deux rampes (45) parallèles sont formées contre chaque épaulement (41) et chaque languette (42) pour constituer une cornière, chaque rampe (45) de la paire de rampes ainsi formée étant située, par exemple, à proximité de chaque jambe du "U" de la découpe (9). Un puits (7) est creusé dans la masse de chaque languette (42), lequel accueille une vis (5) partiellement vissée dans le puits (7), idéalement avant insertion du boîtier (1) dans la cloison creuse (100). Chaque puits (7) est taraudé par la vis (5) lors de la fabrication du boîtier (1). La partie supérieure de chaque vis (5) est alors située dans la partie centrale (61) de la pièce en forme de W arrondi ou aplati (6), les bossages de chaque partie centrale (61) permettant de maintenir la languette de chaque bride (4) sensiblement parallèle à l'axe de symétrie du boîtier (1). Une paire de colonnes (8) est formée sur la face supérieure de chaque épaulement (41), sensiblement perpendiculairement à l'épaulement. Une colonne (8) de chaque paire de colonnes (8) est située de chaque côté du puits (7), de telle façon que chaque colonne puisse pénétrer, par translation de la bride (4) selon un axe parallèle à l'axe de la vis (5), dans l'espace disponible dans les parties extrêmes (62) de la pièce en forme de W arrondi ou aplati (6) coopérant avec la bride (4). La présence des colonnes (8) permet ainsi de limiter les mouvements de rotation de chaque bride (4) selon l'axe de la vis (5) lors des efforts de vissage. Les colonnes (8) ont, par exemple, une forme rectangulaire et sont par exemple disposées dans le plan de la languette (42). L'ensemble comprenant une pièce en forme d'arc (44), une languette (42), un épaulement (41), une paire de rampes (45), un puits (7) et une paire de colonnes (8) forme une bride (4). La longueur de chaque bride (4) est inférieure, au repos, à la distance comprise entre le fond (3) du boîtier (1) et la pièce en forme de W arrondi ou aplati (6) associée à ladite bride (4).

La position des brides (4) au repos correspond à la position des brides (4) pour laquelle l'axe de chaque puits (7) est sensiblement confondu avec l'axe de la partie centrale (61) de la pièce en forme de W arrondi ou aplati (6) associée.

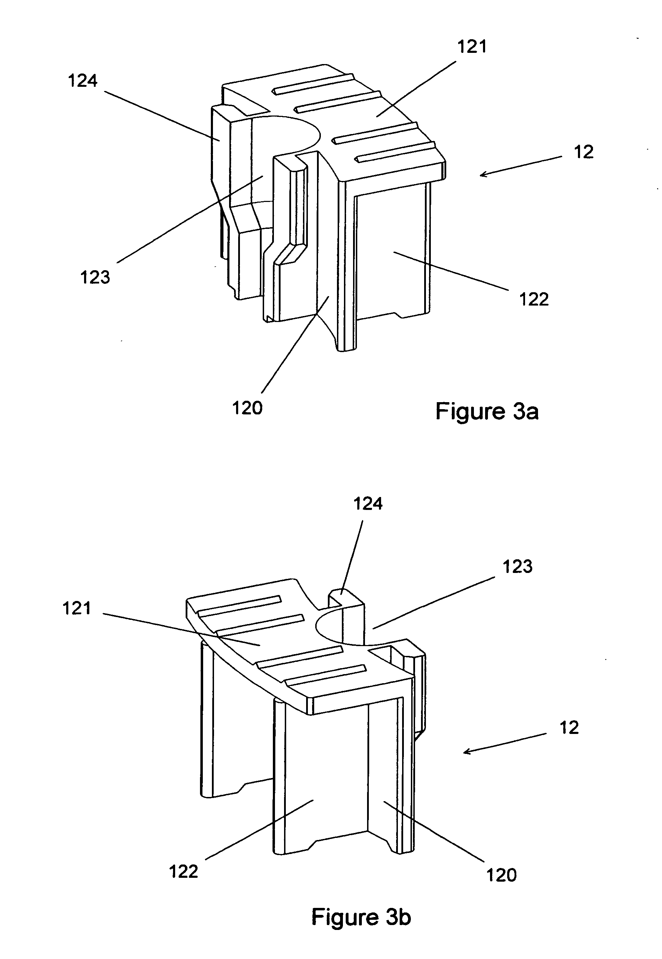

Le boîtier (1) comprend également deux cales (12) amovibles se positionnant chacune dans le prolongement d'une des brides (4), le long de la vis (5) et des colonnes (8). Chaque cale (12), représentée en particulier sur les figures 3a et 3b, est constituée d'une plaque (120), à une extrémité de laquelle est formé un épaulement (121), disposé sensiblement perpendiculairement à ladite plaque (120) de façon à former un élément de section en forme de L retourné. Deux renforts (122) parallèles, par exemple rectangulaires, sont formés contre chaque plaque (120) et chaque épaulement (121). Un demi-puits (123), de section semi-circulaire, est formé dans chaque plaque (120) et accueille l'extrémité supérieure de la vis (5) vissée dans la bride (4) correspondante. Le rayon interne de la section du demi-puits (123) est constant et sensiblement égal à celui de la vis (5) dans la partie du demi-puits (123) proche de l'extrémité libre de la plaque (120), et constant et sensiblement égal à celui de la tête de la vis (5) dans la partie du demi-puits (123) proche de l'extrémité de la plaque (120) solidaire de l'épaulement (121). Entre ces deux parties, le rayon interne du demi-puits (123) varie de façon continue, sur une très petite portion. Chaque demi-puits (123) comporte deux rainures (124) en saillie sur sa surface extérieure, parallèles à l'axe du demi-puits (123). Ces rainures (124) permettent de maintenir chaque cale (12) en place sur le boîtier (1), dans le prolongement d'une bride (4), par insertion des colonnes (8) de la bride entre la plaque (120) de la cale (12) et les rainures (124) de la cale (12). Lorsque les cales (12) sont en place sur le boîtier (1), l'épaulement (121) de la cale (12) est sensiblement parallèle à l'épaulement (41) de la bride (4), comme cela est visible en particulier sur la figure 1. La hauteur de la cale (12) est inférieure à la hauteur des colonnes (8).

Le boîtier (1) comprend également au moins un opercule détachable (11), par exemple en forme d'oreille, sur la partie cylindrique (2) et/ou sur le fond (3) du boîtier. Les opercules détachables (11) ont une épaisseur plus fine que la partie cylindrique (2) et le fond (3) du boîtier (1), et sont prédécoupées, ce qui permet de les détacher facilement par une simple pression du doigt, exercée tout en maintenant fermement le boîtier.

Le boîtier (1) comprend une pluralité de picots (13) sur le pourtour extérieur de la partie cylindrique (2), à proximité du bord ouvert (15) du boîtier (1), utiles lorsque ce dernier est encastré dans une cloison creuse (100), pour, à la fois, empêcher l'enfoncement trop important du boîtier (1) dans la cloison creuse (100), et assurer le maintien du boîtier (1) dans la cloison creuse (100) en attendant la mise en place de l'appareillage électrique.

La pose d'un boîtier (1) à brides (4) sur une cloison creuse (100) nécessite une étape préalable de perçage de la cloison, par exemple, par une scie cloche. Une cloison creuse (100) est constituée, en général, d'au moins une paroi, par exemple en plâtre, disposée parallèlement à une autre paroi, par exemple en plâtre, et supportée par une ossature métallique ou en bois, de telle façon qu'un espace soit compris entre les deux parois. Un autre type de cloison creuse consiste en une paroi, par exemple en plâtre, comprenant un isolant sur une de ses faces, cette paroi étant collée à un mur du côté de l'isolant. Ces deux types de parois ont en général une épaisseur de 13 mm, et plus rarement de 10 mm. Afin d'améliorer l'isolation phonique, une paroi supplémentaire peut être ajoutée contre l'une au moins des parois constituant la cloison creuse, l'épaisseur totale de cette paroi passant donc à 26 mm, ou plus rarement à 23 ou 20 mm.

Le boîtier (1) à brides (4) pour cloisons creuses selon l'invention permet de s'adapter à ces différentes épaisseurs de paroi grâce aux cales (12) amovibles. En effet, la distance comprise entre l'épaulement (41) de chaque bride (4) et le bord ouvert (15) du boîtier (1) est légèrement supérieure à 26 mm et la distance comprise entre l'épaulement (121) de chaque cale (12) et le bord ouvert (15) du boîtier (1) est légèrement supérieure à 13 mm. Ainsi, si la paroi de la cloison creuse a une épaisseur de 10 ou 13 mm, le boîtier est posé avec les cales, tandis que si la paroi de la cloison creuse a une épaisseur de 20, 23 ou 26 mm, les cales sont retirées avant que le boîtier ne soit posé.

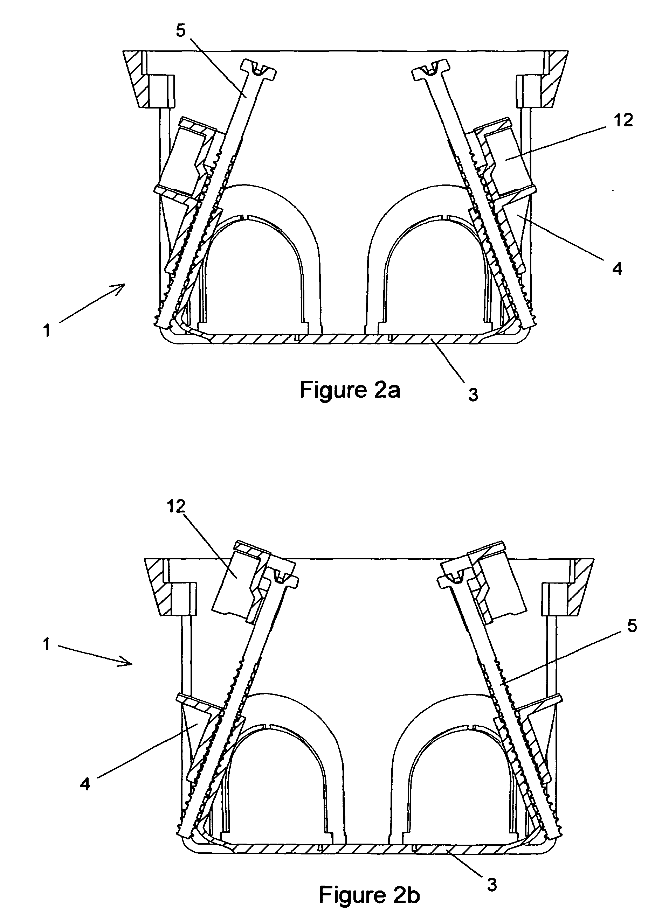

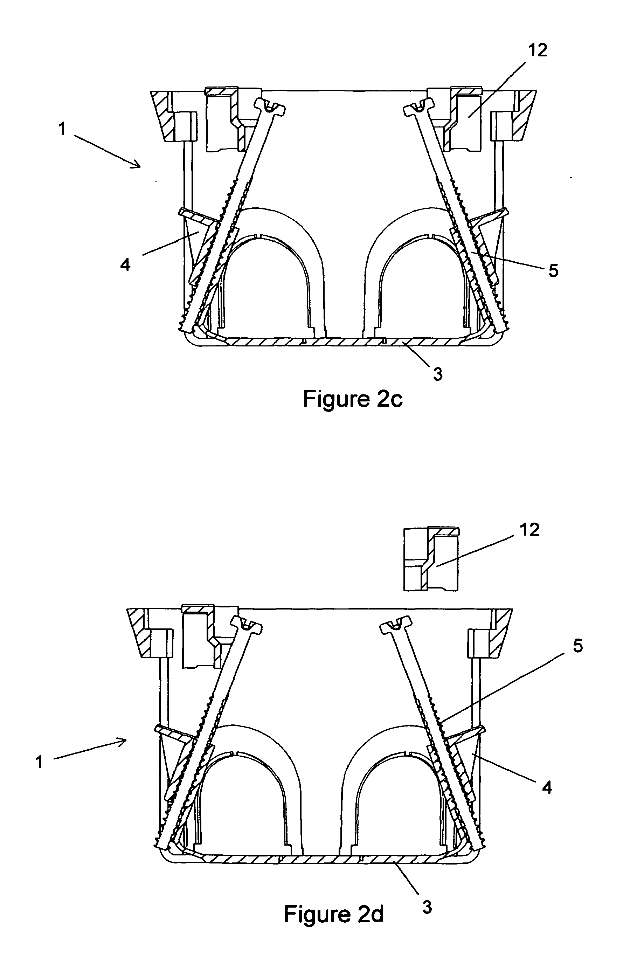

Les cales (12) peuvent facilement être insérées sur le boîtier (1) ou retirées de ce dernier, comme représenté sur les figures 2a à 2d. Lorsqu'elle a lieu, cette étape consistant à retirer ou insérer des cales est réalisée avant insertion du boîtier (1) dans la cloison creuse. Pour retirer chaque cale (12) du boîtier (1), l'ensemble bride (4) - cale (12) correspondant est basculé vers l'intérieur du boîtier en exerçant une traction sur la vis (5) avec les doigts. La cale (12) est ensuite coulissée vers le bord (15) du boîtier (1), le long de la vis (5), en étant guidée par les colonnes (8) de la bride (4), jusqu'à ce que le dessous de la tête de vis atteigne le fond de la partie du demi-puits (123) ayant le diamètre le plus large, comme représenté sur la figure 2b. Dans cette position, la cale (12) est entièrement libérée des colonnes (8) de la bride (4) et peut facilement être libérée de la vis (5) par simple basculement vers l'extérieur du boîtier en maintenant la vis (5) inclinée vers l'intérieur du boîtier, comme représenté sur la figure 2c. Pour insérer chaque cale (12) sur le boîtier (1), les mêmes opérations sont réalisées, dans l'ordre inverse.

La paroi de la cloison creuse (100) est percée au moyen d'une scie cloche, qui permet d'enlever un morceau cylindrique de la cloison creuse (100), sur toute l'épaisseur de la paroi, le diamètre du morceau cylindrique étant sensiblement égal ou légèrement supérieur au diamètre extérieur de la partie cylindrique (2) du boîtier (1).

Le boîtier (1) à brides (4) est inséré à la place du morceau cylindrique qui a été enlevé de la cloison creuse (100) à l'aide de la scie cloche, le bord ouvert (15) du boîtier (1) étant tourné vers l'installateur. Le boîtier (1) est inséré dans la cloison creuse (100), par exemple en tirant simultanément avec les doigts chaque vis (5) partiellement vissée dans la bride (4), vers l'intérieur du boîtier (1), pour que le boîtier (1) puisse pénétrer dans la cloison creuse (100). Chaque vis (5) est alors désencliquetée de la partie centrale (61) de la pièce en forme de W arrondi ou aplati (6) et chaque bride subit une rotation par rapport au fond (3) du boîtier (1). Les brides (4) peuvent également s'enfoncer d'elles-mêmes vers l'intérieur du boîtier (1) sans intervention de l'installateur, par contact de l'épaisseur de la cloison creuse (100) sur les rampes (45) des brides (4). Le bord ouvert (15) du boîtier (1), après insertion du boîtier (1) dans la cloison, se trouve alors à proximité de la face extérieure de la cloison creuse (100). La distance comprise entre l'épaulement (41, 121) de chaque bride (4) ou de chaque cale (12) et le bord ouvert (15) du boîtier (1) est légèrement supérieure à l'épaisseur de la cloison creuse (100) pour permettre une libre rotation de chaque bride (4) ou de chaque ensemble bride (4) - cale (12) derrière l'épaisseur de la cloison creuse. Ainsi, lorsque le boîtier (1) est suffisamment inséré dans la cloison creuse, chaque bride (4) ou chaque ensemble bride (4) - cale (12) reprend sa position de repos par rotation vers l'extérieur du boîtier (1), soit seul(e), soit en étant repoussé(e) par l'utilisateur qui exerce une pression sur les vis (5) avec les doigts. Chaque vis (5) partiellement vissée dans le puits (7) est de nouveau insérée dans la partie centrale (61) de la pièce en forme de W arrondi ou aplati (6). Les épaulements (41, 121) de chaque bride (4) ou de chaque cale (12) sont alors sensiblement parallèles à la face intérieure de la cloison creuse (100) dans laquelle a été encastré le boîtier (1), et situés à proximité de la face intérieure de cette paroi, comme représenté sur les figures, respectivement, 5a et 5b. Le puits (7) de chaque bride (4) se situe alors de nouveau sensiblement dans l'axe de la partie centrale (61) de la pièce en forme de W arrondi ou aplati (6) associée.

Au moins un opercule détachable (11) est détaché avant l'insertion du boîtier (1) dans la cloison creuse (100). Juste avant l'insertion du boîtier (1) dans la cloison creuse, le boîtier (1) est amené à proximité du trou laissé dans la cloison après enlèvement du morceau cylindrique, afin que la gaine contenant les extrémités des fils électriques présents dans la cloison (100), auxquels doit être raccordé l'appareillage électrique, soit insérée dans les ouvertures laissées à l'emplacement des parties détachables (11) qui ont été préalablement détachées.

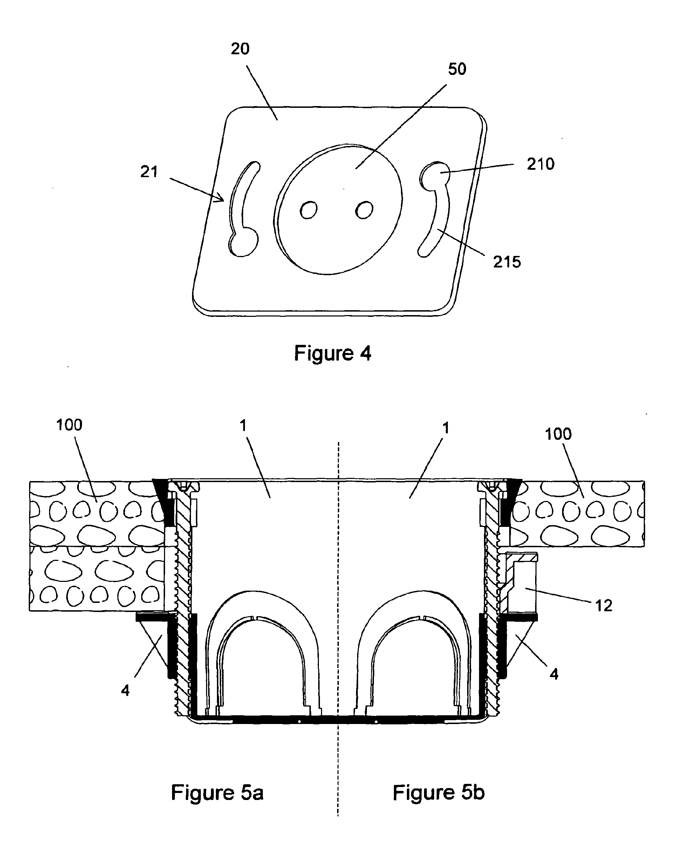

L'appareillage électrique comprend deux parties rigidement fixées : le mécanisme (non représenté) de l'appareillage électrique et la façade (20). Seul le mécanisme s'insère dans le boîtier (1). La façade (20), représentée en particulier sur la figure 4, comprend une interface (50) consistant, par exemple, en deux trous si l'appareillage électrique est une prise de courant, ou en un bouton si l'appareillage électrique est un interrupteur. La façade (20) comprend également deux ouvertures (21) disposées en vis-à-vis sur la façade (20), chaque ouverture (21) étant constituée d'un trou oblong (215) dont l'axe de symétrie décrit un arc de cercle. Au moins une extrémité de chaque ouverture (21) se termine par un orifice circulaire (210). Le diamètre de chaque orifice circulaire (210) est supérieur au diamètre de la tête de vis des vis (5) du boîtier (1). La distance entre les vis (5) du boîtier (1) est la même que la distance entre les deux ouvertures (21). La surface de la façade (20) de l'appareillage électrique étant plus grande que la section de la partie cylindrique (2) du boîtier (1), au moins une fraction de la face arrière de la façade (20) est située contre la face extérieure de la paroi de la cloison creuse (100) dans laquelle est inséré le boîtier (1), lorsque l'appareillage électrique est inséré dans le boîtier (1).

Après insertion du boîtier (1) dans la cloison creuse (100), l'appareillage électrique est amené à proximité du boîtier (1) afin que les extrémités des fils électriques accessibles dans le boîtier soient connectées à l'appareillage électrique. L'étape suivante consiste à insérer le mécanisme de l'appareillage électrique dans le boîtier (1). Chaque vis (5) du boîtier (1), partiellement vissée, pénètre alors dans un orifice circulaire (210) de la façade (20) de l'appareillage électrique. L'appareillage électrique est alors facilement mis en place en exerçant une rotation de ce dernier autour de l'axe du boîtier (1). Chaque vis (5) est ensuite vissée. La longueur de chaque vis (5) est au moins égale à la distance comprise entre le bord (15) du boîtier (1) et l'épaulement (41) de chaque bride (4), augmentée de la longueur du puits (7) associé. Ainsi, lorsque chaque vis (5) est enfoncée jusqu'à ce que la tête de la vis (5) atteigne la façade (20) de l'appareillage électrique, lorsque l'on continue à visser, la bride (4) subit un mouvement de translation selon l'axe de la vis (5) dans la direction du bord ouvert (15) du boîtier (1), grâce à la présence de la pièce en forme d'arc (44), qui se déforme.

Au cours du vissage de chaque vis (5), la paire de colonnes (8) pénètre dans les parties extrêmes (62) de la pièce en forme de W arrondi ou aplati (6) associée. Le vissage est stoppé lorsque l'épaulement (41, 121) de chaque bride (4) ou de chaque cale (12) arrive contre la paroi interne de la cloison creuse (100). La cloison creuse (100), dans laquelle est inséré le boîtier (1), est alors prise en sandwich entre les brides (4) ou cales (12) d'une part, et la face arrière de la façade (20) de l'appareillage électrique d'autre part. L'appareillage électrique est également parfaitement plaqué contre la cloison.

Si une intervention électrique est nécessaire lorsque l'appareillage électrique est en place dans le boîtier (1), le boîtier (1) peut facilement être retiré de la cloison creuse. L'appareillage électrique est tout d'abord retiré du boîtier (1) après un dévissage partiel des vis (5) et une rotation de la façade (20), de façon à faire coïncider chaque vis (5) du boîtier avec un orifice circulaire (210) de la façade (20). Les extrémités des fils électriques sont déconnectées de l'appareillage électrique. Enfin, les brides (4) ou les ensembles bride (4) - cale (12) peuvent être ramenés vers l'intérieur du boîtier (1), par exemple en exerçant une traction sur les vis (5) à l'aide des doigts.

Notons que le boîtier (1) est réalisé, par exemple, en plastique moulé.

Le boîtier (1) et les brides (4) forment un ensemble monobloc.

Il doit être évident, pour les personnes versées dans l'art, que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Boîtier (1) à brides (4) comportant une partie cylindrique (2) fermée par un fond (3) pour fixer un appareillage électrique dans une cloison creuse (100), comprenant au moins deux brides (4) articulées, chaque bride (4) pouvant subir un mouvement de translation et/ou un mouvement de rotation, et chaque bride (4) étant actionnée par une vis (5) pour fixer le boîtier dans la cloison creuse (100), les brides (4) et le boîtier formant un ensemble monobloc, **caractérisé en ce qu'**il comprend également au moins deux cales (12) amovibles, chaque cale (12) étant située dans le prolongement d'une des brides (4), et **en ce que** le vissage de la vis (5) permet simultanément de fixer l'appareillage électrique dans le boîtier (1) et de pincer la cloison creuse (100) entre la façade (20) de l'appareillage électrique et chaque cale (12) des ensembles bride (4) - cale (12).

2. Boîtier (1) à brides (4) selon la revendication 1, **caractérisé en ce que** chaque bride (4) est située dans une ouverture pratiquée dans la partie cylindrique (2) du boîtier (1) et délimitée par une découpe en "U" (9), chaque bride étant reliée au fond (3) du boîtier (1) par une pièce en forme d'arc (44) qui est flexible, permettant la rotation de la bride (4) ou de l'ensemble bride (4) - cale (12) autour de la pièce en forme d'arc (44) pour permettre l'insertion du boîtier (1) dans un perçage cylindrique de la cloison creuse, ou pour retirer le boîtier (1) de ce perçage, la pièce en forme d'arc (44) étant prolongée par une languette (42), à l'extrémité libre de laquelle est formé un épaulement (41) sensiblement perpendiculaire à la languette (42).

3. Boîtier (1) à brides (4) selon la revendication 2, **caractérisé en ce que** chaque bride (4) comprend au moins une rampe (45) formée perpendiculairement à l'épaulement (41) et la languette (42) pour constituer une cornière, la rampe (45) permettant de faciliter l'escamotage de la bride pour permettre l'insertion du boîtier (1) dans le perçage de la cloison creuse.

4. Boîtier (1) à brides (4) selon la revendication 2 ou 3, **caractérisé en ce qu'**un puits (7), taraudé à l'intérieur, est formé dans la masse de la languette (42) de chaque bride (4), et accueille une vis (5) et **en ce qu'**une paire de colonnes (8) est formée perpendiculairement à l'épaulement (41) de chaque bride (4), sur la surface supérieure de ce dernier, chaque colonne de la paire de colonnes (8) étant situé de part et d'autre du puits (7) pour servir de moyen de guidage à chaque cale (12).

5. Boîtier (1) à brides (4) selon la revendication 4, **caractérisé en ce que** chaque cale (12) comporte une plaque (120), à une extrémité de laquelle un épaulement (121) est formé sensiblement perpendiculairement à ladite plaque (120), et deux rainures (124), chaque cale (12) étant maintenue en place sur le boîtier (1), dans le prolongement d'une bride (4), par insertion des colonnes (8) de la bride entre la plaque (120) de la cale (12) et les rainures (124) de la cale (12), l'épaulement (121) de la cale (12) étant sensiblement parallèle à l'épaulement (41) de la bride (4), duquel il est séparé par la hauteur de la plaque (120), et la hauteur de la cale (12) étant inférieure à la hauteur des colonnes (8).

6. Boîtier (1) à brides (4) selon la revendication 5, **caractérisé en ce que** chaque cale comporte deux renforts (122) parallèles formés contre chaque plaque (120) et chaque épaulement (121), et un demi-puits (123), de section semi-circulaire, formé dans chaque plaque (120), ledit demi-puits (123) accueillant l'extrémité supérieure de la vis (5) vissée dans la bride (4) correspondante, et les rainures (124) de la cale étant formées en saillie sur la surface extérieure du demi-puits (123), parallèlement à l'axe de ce dernier.

7. Boîtier (1) à brides (4) selon la revendication 6, **caractérisé en ce que** le rayon interne de la section circulaire du demi-puits (123) est constant et sensiblement égal à celui de la vis (5) dans la partie du demi-puits (123) proche de l'extrémité libre de la plaque (120), et constant et sensiblement égal à celui de la tête de la vis (5) dans la partie du demi-puits (123) proche de l'extrémité de la plaque (120) solidaire de l'épaulement (121), le rayon interne du demi-puits (123) varie de façon continue entre ces deux parties.

8. Boîtier (1) à brides (4) selon une des revendications 4 à 7, **caractérisé en ce qu'**il comprend au moins deux pièces en forme de W arrondi ou aplati (6), la partie centrale (61) de chaque pièce en forme de W arrondi ou aplati (6) comportant deux bossages (610) pour maintenir une vis (5) encliquetée dans l'espace disponible dans la partie centrale (61), chacun des bossages (610) étant situé de part et d'autre de l'ouverture de la partie centrale (61), et chaque pièce en forme de W arrondi ou aplati étant disposée de façon à pouvoir coopérer avec une bride (4).

9. Boîtier (1) à brides (4) selon la revendication 8, **caractérisé en ce que**, le boîtier étant au repos, le puits (7) de chaque bride (4) se situe dans l'axe de la partie centrale (61) de la pièce en forme de W arrondi ou aplati (6) associée, et les colonnes (8) de chaque bride (4) se situent respectivement dans les axes des parties extrêmes (62) de la pièce en forme de W arrondi ou aplati (6) associée.

10. Boîtier (1) à brides (4) selon la revendication 9, **caractérisé en ce que**, l'arrière de l'appareillage électrique étant inséré dans le boîtier encastré dans la cloison creuse, chaque vis (5), insérée dans un moyen de fixation (21) de l'appareillage électrique, est vissée dans le puits (7) associé à ladite vis (5), et chaque bride (4) ou chaque ensemble bride (4) - cale (12) subit un mouvement de translation selon l'axe de la vis (5), entraînant l'insertion de chaque paire de colonnes (8) dans l'espace disponible dans les parties extrêmes (62) de la pièce en forme de W arrondi ou aplati, pour assurer la prise en sandwich de la cloison (100) entre les épaulements (41, 121) des brides (4) ou des cales (12) et la face arrière de la façade (20) de l'appareillage électrique.

11. Boîtier à brides (4) selon la revendication 10, **caractérisé en ce que** le moyen de fixation (21) de l'appareillage électrique comprend au moins deux trous oblongs (215) dont l'axe de symétrie décrit un arc de cercle et dont une extrémité se termine par une portion circulaire (210) de diamètre supérieur au diamètre de la tête de vis (5), l'entraxe des trous oblongs (215) étant sensiblement égale à l'entraxe des vis (5).

12. Boîtier (1) à brides (4) selon une des revendications 1 à 11, **caractérisé en ce que** le boîtier (1) comporte des picots (13) en saillie sur le pourtour extérieur du boîtier (1) à proximité de son bord ouvert (15) pour l'empêcher de tourner par rapport à la cloison creuse (100) et assurer son maintien en attendant la mise en place de l'appareillage électrique.

13. Boîtier (1) à brides (4) selon une des revendications 1 à 12, **caractérisé en ce que** la partie cylindrique (2) et/ou le fond (3) du boîtier (1) comprend un ou plusieurs opercules détachables (11) pour permettre la connexion de l'appareillage électrique à des fils électriques situés dans la cloison creuse (100).

14. Procédé pour retirer chaque cale (12) du boîtier (1) à brides (4) selon une des revendications 1 à 13, avant fixation de l'appareillage électrique dans une cloison creuse (100) à l'aide du boîtier, **caractérisé en ce qu'**il comprend les étapes suivantes :
- rotation de chaque ensemble bride (4) - cale (12) vers l'intérieur du boîtier (1),
- coulissement de chaque cale (12) le long de la vis (5), guidé par les colonnes (8) de la bride (4), vers le bord (15) du boîtier, jusqu'à ce que le dessous de la tête de vis (5) atteigne le fond de la partie du demi-puits (123) ayant le rayon le plus important,
- basculement de la cale (12) vers l'extérieur du boîtier (1) en maintenant la vis (5) inclinée vers l'intérieur du boîtier (1).

## Claims

1. Housing (1) with flanges (4) comprising a cylindrical portion (2) closed by a bottom (3) in order to fix an electric apparatus into a hollow partition (100) comprising at least two articulated flanges (4), each flange (4) being able to sustain a translation movement and/or a rotation movement, and each flange (4) being actuated by a screw (5) in order to fix the housing into the hollow partition (100), the flanges (4) and the housing forming a one-piece assembly, **characterized in that** it also comprises at least two removable blocks (12), each block (12) being situated in the extension of one of the flanges (4) and **in that** screwing the screw (5) makes it possible simultaneously to fix the electric apparatus into the housing (1) and to pinch the hollow partition (100) between the façade (20) of the electric apparatus and each block (12) of the flange (4) - block (12) assemblies.

2. Housing (1) with flanges (4) according to Claim 1, **characterized in that** each flange (4) is situated in an opening made in the cylindrical portion (2) of the housing (1) and delimited by a U-shaped cut-out (9), each flange being connected to the bottom (3) of the housing (1) via an arc-shaped part (44) which is flexible, allowing the flange (4) or the flange (4) - block (12) assembly to rotate about the arc-shaped part (44) in order to allow the housing (1) to be inserted into a cylindrical drill hole in the hollow partition, or in order to remove the housing (1) from this drill hole, the arc-shaped part (44) being extended by a tongue (42), at the free end of which a shoulder (41) is formed substantially perpendicular to the tongue (42).

3. Housing (1) with flanges (4) according to Claim 2, **characterized in that** each flange (4) comprises at least one ramp (45) formed perpendicularly to the shoulder (41) and the tongue (42) in order to form an angle piece, the ramp (45) making it easier to retract the flange in order to allow the insertion of the housing (1) into the drill hole in the hollow partition.

4. Housing (1) with flanges (4) according to Claim 2 or 3, **characterized in that** a well (7), tapped on the inside, is formed in the body of the tongue (42) of each flange (4), and accommodates a screw (5) and **in that** a pair of columns (8) is formed perpendicularly to the shoulder (41) of each flange (4), on the top surface of the latter, each column of the pair of columns (8) being situated on either side of the well (7) in order to serve as a means for guiding each block (12).

5. Housing (1) with flanges (4) according to Claim 4, **characterized in that** each block (12) comprises a plate (120), at one end of which a shoulder (121) is formed substantially perpendicularly to the said plate (120), and two grooves (124), each block (12) being held in place on the housing (1), in the extension of a flange (4), by the insertion of the columns (8) of the flange between the plate (120) of the block (12) and the grooves (124) of the block (12), the shoulder (121) of the block (12) being substantially parallel to the shoulder (41) of the flange (4), from which it is separated by the height of the plate (120), and the height of the block (12) being less than the height of the columns (8).

6. Housing (1) with flanges (4) according to Claim 5, **characterized in that** each block comprises two parallel reinforcements (122) formed against each plate (120) and each shoulder (121), and a half-well (123), with a semi-circular section, formed in each plate (120), the said half-well (123) accommodating the top end of the screw (5) screwed into the corresponding flange (4), and the grooves (124) of the block being formed in protrusion on the outer surface of the half-well (123), parallel to the axis of the latter.

7. Housing (1) with flanges (4) according to Claim 6, **characterized in that** the internal radius of the circular section of the half-well (123) is constant and substantially equal to that of the screw (5) in the portion of the half-well (123) close to the free end of the plate (120), and constant and substantially equal to that of the head of the screw (5) in the portion of the half-well (123) close to the end of the plate (120) secured to the shoulder (121), the internal radius of the half-well (123) varying continuously between these two portions.

8. Housing (1) with flanges (4) according to one of Claims 4 to 7, **characterized in that** it comprises at least two parts in the shape of a rounded or flattened W (6), the central portion (61) of each part in the shape of a rounded or flattened W (6) comprising two bosses (610) in order to hold a screw (5) snapped into the space available in the central portion (61), each of the bosses (610) being situated on either side of the opening of the central portion (61), and each part in the shape of a rounded or flattened W being placed so as to be able to interact with a flange (4).

9. Housing (1) with flanges (4) according to Claim 8, **characterized in that**, when the housing is at rest, the well (7) of each flange (4) is situated in the axis of the central portion (61) of the associated part in the shape of a rounded or flattened W (6), and the columns (8) of each flange (4) are situated respectively in the axes of the end portions (62) of the associated part in the shape of a rounded or flattened W (6).

10. Housing (1) with flanges (4) according to Claim 9, **characterized in that**, when the rear of the electric apparatus is inserted into the housing sunk into the hollow partition, each screw (5), inserted into a means (21) for fastening the electric apparatus, is screwed into the well (7) associated with the said screw (5), and each flange (4) or each flange (4) - block (12) assembly undergoes a translation movement along the axis of the screw (5), causing the insertion of each pair of columns (8) into the space available in the end portions (62) of the part in the shape of a rounded or flattened W, in order to sandwich the partition (100) between the shoulders (41, 121) of the flanges (4) or of the blocks (12) and the rear face of the façade (20) of the electric apparatus.

11. Housing with flanges (4) according to Claim 10, **characterized in that** the means (21) for fastening the electric apparatus comprises at least two oblong holes (215) the axis of symmetry of which describes an arc of a circle and one end of which terminates in a circular portion (210) with a diameter greater than the diameter of the head of a screw (5), the distance between the axes of the oblong holes (215) being substantially equal to the distance between the axes of the screws (5).

12. Housing (1) with flanges (4) according to one of Claims 1 to 11, **characterized in that** the housing (1) comprises barbs (13) protruding on the outer periphery of the housing (1) close to its open edge (15) in order to prevent it from turning relative to the hollow partition (100) and ensure that it is held while awaiting the installation of the electric apparatus.

13. Housing (1) with flanges (4) according to one of Claims 1 to 12, **characterized in that** the cylindrical portion (2) and/or the bottom (3) of the housing (1) comprises one or more detachable covers (11) in order to allow the electric apparatus to be connected to electric wires situated in the hollow partition (100).

14. Method for removing each block (12) from the housing (1) with flanges (4) according to one of Claims 1 to 13, before the electric apparatus is fixed into a hollow partition (100) with the aid of the housing, **characterized in that** it comprises the following steps:
- rotating each flange (4) - block (12) assembly towards the inside of the housing (1),
- sliding each block (12) along the screw (5), guided by the columns (8) of the flange (4), towards the edge (15) of the housing, until the bottom of the head of the screw (5) reaches the bottom of the half-well portion (123) having the largest radius,
- tilting the block (12) towards the outside of the housing (1) while holding the screw (5) inclined towards the inside of the housing (1).

## Patentansprüche

1. Gehäuse (1) mit Flanschen (4), das einen von einem Boden (3) verschlossenen zylindrischen Teil (2) aufweist, um ein elektrisches Gerät in einer Hohlwand (100) zu befestigen, das mindestens zwei angelenkte Flansche (4) enthält, wobei jeder Flansch (4) eine Translations- und/oder eine Drehbewegung erfahren kann und jeder Flansch (4) von einer Schraube (5) betätigt wird, um das Gehäuse in der Hohlwand (100) zu befestigen, wobei die Flansche (4) und das Gehäuse eine einstückige Einheit bilden, **dadurch gekennzeichnet, dass** es ebenfalls mindestens zwei entfernbare Keile (12) enthält, wobei jeder Keil (12) sich in der Verlängerung eines der Flansche (4) befindet, und dass das Einschrauben der Schraube (5) es gleichzeitig ermöglicht, das elektrische Gerät im Gehäuse (1) zu befestigen und die Hohlwand (100) zwischen der Frontverkleidung (20) des elektrischen Geräts und jedem Keil (12) der Einheiten aus Flansch (4) und Keil (12) einzuklemmen.

2. Gehäuse (1) mit Flanschen (4) nach Anspruch 1, **dadurch gekennzeichnet, dass** jeder Flansch (4) sich in einer Öffnung befindet, die im zylindrischen Teil (2) des Gehäuses (1) angebracht ist und von einem U-förmigen Ausschnitt (9) begrenzt wird, wobei jeder Flansch mit dem Boden (3) des Gehäuses (1) über ein bogenförmiges Bauteil (44) verbunden ist, das flexibel ist, die Drehung des Flanschs (4) oder der Einheit aus Flansch (4) und Keil (12) um das bogenförmige Bauteil (44) erlaubt, um die Einführung des Gehäuses (1) in eine zylindrische Bohrung der Hohlwand einzuführen oder um das Gehäuse (1) aus dieser Bohrung zu entfernen, wobei das bogenförmige Bauteil (44) von einer Zunge (42) verlängert wird, an deren freiem Ende eine Schulter (41) im Wesentlichen lotrecht zur Zunge (42) ausgebildet ist.

3. Gehäuse (1) mit Flanschen (4) nach Anspruch 2, **dadurch gekennzeichnet, dass** jeder Flansch (4) mindestens eine Rampe (45) enthält, die lotrecht zur Schulter (41) und zur Zunge (42) ausgebildet ist, um ein Winkelstück zu bilden, wobei die Rampe (45) es ermöglicht, das Einziehen des Flanschs zu erleichtern, um die Einführung des Gehäuses (1) in die Bohrung der Hohlwand zu erlauben.

4. Gehäuse (1) mit Flanschen (4) nach Anspruch 2 oder 3, **dadurch gekennzeichnet, dass** ein Schacht (7) mit Innengewinde in der Masse der Zunge (42) jedes Flanschs (4) ausgebildet ist und eine Schraube (5) aufnimmt, und dass ein Paar von Säulen (8) lotrecht zur Schulter (41) jedes Flanschs (4) auf der Oberseite dieser letzteren ausgebildet ist, wobei jede Säule des Paars von Säulen (8) sich zu beiden Seiten des Schachts (7) befindet, um als Führungseinrichtung für jeden Keil (12) zu dienen.

5. Gehäuse (1) mit Flanschen (4) nach Anspruch 4, **dadurch gekennzeichnet, dass** jeder Keil (12) eine Platte (120), an deren einem Ende eine Schulter (121) im Wesentlichen lotrecht zu der Platte (120) geformt ist, und zwei Nuten (124) aufweist, wobei jeder Keil (12) im Gehäuse (1) in der Verlängerung eines Flanschs (4) durch Einführen der Säulen (8) des Flanschs zwischen die Platte (120) des Keils (12) und die Nuten (124) des Keils (12) an Ort und Stelle gehalten wird, wobei die Schulter (121) des Keils (12) im Wesentlichen parallel zur Schulter (41) des Flanschs (4) ist, von der sie durch die Höhe der Platte (120) getrennt ist, und die Höhe des Keils (12) geringer als die Höhe der Säulen (8) ist.

6. Gehäuse (1) mit Flanschen (4) nach Anspruch 5, **dadurch gekennzeichnet, dass** jeder Keil zwei parallele Verstärkungen (122), die gegen jede Platte (120) und jede Schulter (121) geformt sind, und einen Halbschacht (123) mit Halbkreisquerschnitt aufweist, der in jeder Platte (120) ausgebildet ist, wobei der Halbschacht (123) das obere Ende der Schraube (5) aufnimmt, die in den entsprechenden Flansch (4) geschraubt ist, und die Nuten (124) des Keils an der Außenfläche des Halbschachts (123) parallel zu dessen Achse vorspringend geformt sind.

7. Gehäuse (1) mit Flanschen (4) nach Anspruch 6, **dadurch gekennzeichnet, dass** der Innenradius des Kreisquerschnitts des Halbschachts (123) konstant und im Wesentlichen gleich demjenigen der Schraube (5) in dem Teil des Halbschachts (123) nahe dem freien Ende der Platte (120) und konstant und im Wesentlichen gleich demjenigen des Kopfs der Schraube (5) in dem Teil des Halbschachts (123) nahe dem Ende der Platte (120) ist, das fest mit der Schulter (121) verbunden ist, wobei der Innenradius des Halbschachts (123) kontinuierlich zwischen diesen zwei Teilen variiert.

8. Gehäuse (1) mit Flanschen (4) nach einem der Ansprüche 4 bis 7, **dadurch gekennzeichnet, dass** es mindestens zwei Bauteile in Form eines abgerundeten oder abgeflachten W (6) aufweist, wobei der zentrale Bereich (61) jedes Bauteils in Form eines abgerundeten oder abgeflachten W (6) zwei Buckel (610) aufweist, um eine Schraube (5) in dem verfügbaren Raum im zentralen Bereich (61) eingerastet zu halten, wobei jeder der Buckel (610) sich zu beiden Seiten der Öffnung des zentralen Bereichs (61) befindet, und wobei jedes Bauteil in Form eines abgerundeten oder abgeflachten W so angeordnet ist, dass es mit einem Flansch (4) zusammenwirken kann.

9. Gehäuse (1) mit Flanschen (4) nach Anspruch 8, **dadurch gekennzeichnet, dass**, wenn das Gehäuse in der Ruhestellung ist, der Schacht (7) jedes Flanschs (4) sich in der Achse des zentralen Bereichs (61) des zugeordneten Bauteils in Form eines abgerundeten oder abgeflachten W (6) befindet, und die Säulen (8) jedes Flanschs (4) sich je in den Achsen der Endbereiche (62) des zugeordneten Bauteils in Form eines abgerundeten oder abgeflachten W (6) befinden.

10. Gehäuse (1) mit Flanschen (4) nach Anspruch 9, **dadurch gekennzeichnet, dass**, wenn die Rückseite des elektrischen Geräts in das in die Hohlwand eingesetzte Gehäuse eingeführt wird, jede Schraube (5), die in eine Befestigungseinrichtung (21) des elektrischen Geräts eingeführt ist, in den der Schraube (5) zugeordneten Schacht (7) geschraubt wird, und jeder Flansch (4) oder jede Einheit aus Flansch (4) und Keil (12) eine Translationsbewegung gemäß der Achse der Schraube (5) erfährt, die das Einführen jedes Paars von Säulen (8) in den verfügbaren Raum in den Endbereichen (62) des Bauteils in Form eines abgerundeten oder abgeflachten W nach sich zieht, um das Einklemmen der Wand (100) zwischen den Schultern (41, 121) der Flansche (4) oder der Keile (12) und der Rückseite der Frontverkleidung (20) des elektrischen Geräts zu gewährleisten.

11. Gehäuse mit Flanschen (4) nach Anspruch 10, **dadurch gekennzeichnet, dass** die Befestigungseinrichtung (21) des elektrischen Geräts mindestens zwei Langlöcher (215) enthält, deren Symmetrieachse einen Kreisbogen beschreibt, und von denen ein Ende in einem kreisförmigen Abschnitt (210) mit einem größeren Durchmesser als der Durchmesser des Schraubenkopfs (5) endet, wobei der Achsabstand der Langlöcher (215) im Wesentlichen gleich dem Achsabstand der Schrauben (5) ist.

12. Gehäuse (1) mit Flanschen (4) nach einem der Ansprüche 1 bis 11, **dadurch gekennzeichnet, dass** das Gehäuse (1) auf dem Außenumfang des Gehäuses (1) in der Nähe seines offenen Rands (15) vorstehende Vorsprünge (13) aufweist, um es daran zu hindern, sich bezüglich der Hohlwand (100) zu drehen und in Erwartung des Einsetzens des elektrischen Geräts seinen Halt zu gewährleisten.

13. Gehäuse (1) mit Flanschen (4) nach einem der Ansprüche 1 bis 12, **dadurch gekennzeichnet, dass** der zylindrische Teil (2) und/oder der Boden (3) des Gehäuses (1) eine oder mehrere lösbare Abdeckungen (11) enthält, um die Verbindung des elektrischen Geräts mit elektrischen Drähten zu erlauben, die sich in der Hohlwand (100) befinden.

14. Verfahren zum Herausziehen jedes Keils (12) aus dem Gehäuse (1) mit Flanschen (4) nach einem der Ansprüche 1 bis 13 vor der Befestigung des elektrischen Geräts in einer Hohlwand (100) mit Hilfe des Gehäuses, **dadurch gekennzeichnet, dass** es die folgenden Schritte enthält:
- Drehen jeder Einheit aus Flansch (4) und Keil (12) zur Innenseite des Gehäuses (1),
- Gleiten jedes Keils (12) entlang der Schraube (5), geführt durch die Säulen (8) des Flanschs (4), zum Rand (15) des Gehäuses, bis die Unterseite des Schraubenkopfs (5) den Boden des Teils des Halbschachts (123) erreicht, der den größten Radius hat,
- Kippen des Keils (12) zur Außenseite des Gehäuses (1), indem die Schraube (5) zur Innenseite des Gehäuses (1) geneigt gehalten wird.
